# EUROPÄISCHE PATENTSCHRIFT

(11) **EP 1 497 519 B1**
(45) Veröffentlichungstag und Bekanntmachung des Hinweises auf die Patenterteilung: **15.02.2006**
(21) Anmeldenummer: 03729825.4
(22) Anmeldetag: 09.04.2003
(51) Int. Cl.: E05C 3/04, B62D 33/037

(54) **KIPPERVERSCHLUSS**
TILTING LATCH
VERROU DE BASCULEMENT

(30) Priorität: 09.04.2002 DE 10215633
(43) Veröffentlichungstag der Anmeldung: 19.01.2005
(73) Patentinhaber: Friedrich Bergmeister Gesenkschmiede GmbH & Co. KG, 42655 Solingen (DE); Bergmeister, Friedrich, 42655 Solingen (DE)
(72) Erfinder: Bergmeister, Friedrich, 42655 Solingen (DE)
(74) Vertreter: Bauer, Wulf
(86) Internationale Anmeldenummer: PCT/DE2003/001173
(87) Internationale Veröffentlichungsnummer: WO 2003/085228

(56) Entgegenhaltungen:
- EP-A- 0 409 075
- DE-A- 3 305 345
- DE-A- 3 830 320
- DE-U- 29 519 712
- US-A- 2 634 997

## Beschreibung

Gegenstand der vorliegenden Erfindung ist ein Kipperverschluss, auch als Pendelverschluss bezeichnet, zum Verriegeln einer abklappbaren Bordwand eines Nutzfahrzeugs. Unter einem Nutzfahrzeug sind im Zusammenhang mit der vorliegenden Erfindung insbesondere auch PKW-Anhänger zu verstehen. Vor allem geeignet sind derartige Verschlüsse zum Verriegeln einer abklappbaren Bordwand eines Kippers, bei der der Kipperverschluss selbst im verschlossenen Zustand eine Drehlagerung für die abklappbare Bordwand ausbildet.

Dokument EP-A-0 058 990 offenbart einen Kipperverschluss gemäß dem Oberbegriff des Anspruch 1.

Derartige Kipperverschlüsse sind aus dem Stand der Technik seit langem bekannt. Sie weisen stets eine Grundplatte auf, die zur Befestigung an einer weiteren, im allgemeinen feststehenden Bordwand oder an einer Runge des Nutzfahrzeuges vorgesehen ist, und einen auf dieser Grundplatte schwenkbar gelagertem Handhebel. Bei der Runge kann es sich z.B. um eine feststehende Runge oder eine Eckrunge handeln. Grundplatte und Handhebel sind so ausgebildet, dass Grundplatte und Handhebel gemeinschaftlich im Schließzustand des Kipperverschlusses eine Lagerbuchse zur Festlegung eines Verschlussbolzens ausbilden, der mit der abklappbaren Bordwand verbunden ist. Anstelle eines Verschlussbolzens kann auch ein Verschlusshaken vorgesehen sein, der bei geöffnetem Kipperverschluss vollständig freigegeben wird, so dass auch ein Abklappen der Bordwand, an der die Grundplatte angeordnet ist, ermöglich wird.

Weiterhin weisen derartige Kipperverschlüsse einen Öffnungszustand auf, in dem der Verschlussbolzen der abklappbaren Bordwand freigegeben wird. Der Öffnungszustand wird hergestellt durch manuelles Verschwenken des Handhebels aus einer Schließstellung und einer Freigabestellung.

Trotz einer mechanischen Vorspannung der Drehlagerung des Handhebels auf der Grundplatte und weiterer Maßnahmen, die eine Arretierung des Handhebels in seiner Schließstellung z. B. mittels Selbsthemmung zum Ziel haben, ist es zur Erhöhung der Betriebssicherheit solcher Kitpperverschlüsse unerlässlich, dass der Handhebel des Verschlusses in seiner Schließstellung zusätzlich gesichert wird. Dies geschieht bei den aus dem Stand der Technik bekannten Kipperverschlüssen dadurch, dass sowohl im Handhebel als auch in der Grundplatte zumindest je eine Bohrung vorgesehen sind, die in der Schließstellung des Handhebels zur Überdeckung kommen. Um den Handhebel in der Schließstellung zu arretieren, wird vom Benutzer ein Sicherungsstift durch beide Bohrungen hindurch gesteckt, der ein unbeabsichtigtes Verdrehen des Handhebels aus der Schließstellung und damit eine unbeabsichtigte Öffnung des Kipperverschlusses zuverlässig verhindert.

Im praktischen Einsatz der aus dem Stand der Technik bekannten Verschlüsse hat sich nun heraus gestellt, dass diese Art der Sicherung als nicht befriedigend angesehen werden kann, da einerseits der Sicherungsstift zusätzlich gegen Verlieren gesichert werden muss, was weitere Maßnahmen wie z.B. das Befestigen des Sicherungsstifts mittels einer Kette an der Grundplatte erforderlich macht, andererseits stets ein Mitwirken des Benutzers erforderlich ist. Aufgrund der Zeitnot, unter der Nutzfahrzeuge häufig verwendet werden, unterbleibt daher im praktischen Einsatz oftmals eine ordnungsgemäße Sicherung des Kipperverschlusses.
Aufgabe der vorliegenden Erfindung ist es daher einen Kipperverschluss in Alternative zu dem Stand der Technik zu entwickeln, wobei der Kipperverschluss beim Verschließen selbsttätig in seinem Schließzustand gesichert wird, ohne das hierzu ein manuelles Eingreifen des Benutzers erforderlich ist.

Gelöst wird diese Aufgabe durch einen Kipperverschluss mit den Merkmalen des Hauptanspruchs.

Erfindungsgemäß wird am Kipperverschluss ein federnd ausgebildetes Riegelmittel und ein zugehöriger Fangbereich vorgesehen. Dabei ist das Riegelmittel am Handhebel und der Fangbereich an der Grundplatte vorgesehen, oder umgekehrt. Im praktischen Einsatz hat es sich als besonders vorteilhaft erwiesen, wenn das Riegelmittel am Handhebel vorgesehen ist. Riegelmittel und Fangbereich sind dergestalt ausgestaltet, dass das Riegelmittel im Schließzustand des Kipperverschlusses so in den Fangbereich eingreift, dass der Handhebel in seiner Schließstellung arretiert ist. Dabei ist das Riegelmittel so ausgebildet, dass es beim Verschwenken des Handhebels aus der Freigabestellung in die Schließstellung aufgrund seiner federnden Ausbildung selbsttätig in Eingriff mit dem Fangbereich gelangt.

Aufgrund der federnden Ausbildung des Riegelmittels verbleibt dieses im Schließzustand des Kipperverschlusses stets zuverlässig im Eingriff mit dem Fangbereich. Befindet sich das Riegelmittel im Eingriff mit dem Fangbereich, so ist eine Drehbewegung des Handhebels unmöglich. Es ergibt sich somit eine sichere Arretierung des Handhebels in seiner Schließstellung, so dass der Kipperverschluss beim Einstellen des Schließzustandes selbsttätig und sicher arretiert wird. Die Federwirkung des Riegelmittels wird dabei so gewählt, dass unter allen bestimmungsgemäßen Betriebszuständen des Nutzfahrzeugs sichergestellt ist, dass das Riegelmittel im Eingriff mit dem Fangbereich verbleibt.
Ist der Schließzustand des Kipperverschlusses hergestellt, so kann der Kipperverschluss nur geöffnet werden, indem das Riegelmittel manuell vom Benutzer aus dem Fangbereich des Verschlusses herausgeführt wird.

Besondere Vorteile ergeben sich, wenn der Fangbereich als Vorsprung ausgebildet ist, an dem das Riegelmittel im Schließzustand des Kipperverschlusses aufgrund seiner federnden Ausbildung zur Anlage kommt. Je nach konkreter Ausgestaltung des Kipperverschlusses ist es dabei möglich, die Kombination von Riegelmittel und Fangbereich entweder so auszugestalten, dass das Riegelmittel von einem hakenartigen Vorsprung gefangen wird, oder dass das Riegelmittel durch Anlage an einem stufenartigen Vorsprung die Bewegung des Handhebels zumindest in einer Richtung blockiert.

Ein erfindungsgemäßer Kipperverschluss lässt sich auf ökonomische Weise aus dem aus der Stand der Technik bekannten Kipperverschlüssen erstellen, wenn das Riegelmittel als drehbar gelagerter Bügel aus Stahldraht ausgebildet ist, der in einer Drehrichtung federnd vorgespannt ist. Dies lässt sich einfach dadurch erzielen, in dem der Bügel offene Enden aufweist, die an zwei benachbarten, jedoch verschiedenen Orten gelagert sind und dabei den Federbügel so vorspannen, so dass sich eine Vorspannung in einer bestimmten Drehrichtung ergibt. Wird ein solcher Bügel am Handhebel des Kipperverschlusses vorgesehen, so ist er auf einfachste Weise mit dem Handhebel zu verbinden, indem die offenen Enden des Bügels in hierzu vorgesehene Bohrungen im Handhebel eingesteckt werden. Der zugehörige Fangbereich lässt sich auf einfachste Weise als hakenförmiger Vorsprung oder stufenförmige Anlagefläche an der Grundplatte ausbilden. Dies kann entweder bereits beim Schmiedevorgang der Grundplatte oder durch eine Nachbearbeitung der Grundplatte erfolgen.

Eine besonders wenig störanfällige Ausführung des erfindungsgemäßen Kipperverschlusses ergibt sich, wenn das Riegelmittel beim Verschwenken des Handhebels aus der Freigabestellung in die Schließstellung unter Ausführung einer Drehbewegung in Eingriff mit dem Fangbereich gelangt. Hierzu kann vorteilhaft der vorstehend beschriebene Aufbau des Riegelmittels als drehbar gelagerter federnder Bügel aus Stahldraht verwendet werden.

Weitere Merkmale des erfindungsgemäßen Kipperverschlusses sowie deren Vorteile ergeben sich aus den Ausführungsbeispielen, die nicht einschränkend zu verstehend sind und die im folgenden anhand der Zeichnung erläutert werden. In dieser zeigen:
- Fig. 1:: einen Handhebel eines Kipperverschlusses in Aufsicht,
- Fig. 2:: eine Grundplatte eines Kipperverschlusses in Aufsicht,
- Fig. 3a:: eine Aufsicht auf ein Riegelmittel,
- Fig. 3b:: eine Seitenansicht eines Riegelmittels,
- Fig. 4:: eine erste Ausführungsform eines erfindungsgemässen Kipperverschlusses in Schließstellung,
- Fig. 5:: eine zweite Ausführungsform eines erfindungsgemässen Kipperverschlusses in Schließstellung und
- Fig. 6:: der Kipperverschluss aus Figur 4 im Öffnungszustand.

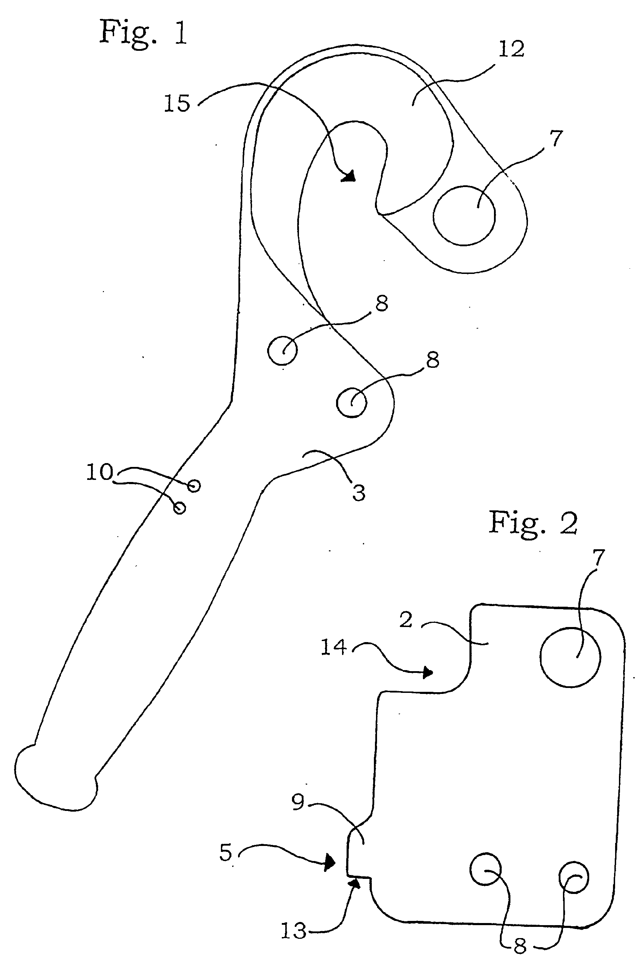

Die Einzelteile eines erfindungsgemässen Kipperverschlusses gemäss eines ersten Ausführungsbeispiels sind aus den Figuren 1, 2, 3a und 3b ersichtlich. Figur 1 zeigt einen Handhebel 3. Der Handhebel 3 ist geschmiedet, insbesondere gesenkgeschmiedet, und aus einem Stahl mit den erforderlichen Festigkeitswerten, beispielsweise Baustahl, ausgeführt. Die Oberfläche des gesamten Handhebels 3 kann korrosionsgeschützt ausgeführt sein, beispielsweise mittels Feuerverzinkung. Alternativ kann auch eine Lackierung vorgesehen werden. Im Handhebel 3 ist eine Durchgangsbohrung 7 ausgeführt, die zur Aufnahme eines Bolzens 6 vorgesehen ist, mittels welchem der Handhebel 3 mit einer Grundplatte 2 drehbar verbunden wird.

Weiterhin weist der Handhebel 3 in demjenigen Bereich, in dem der Verschlussbolzen 1 der zu fixierenden Bordwand des Nutzfahrzeuges gefangen wird, eine Sicherungsfläche 12 auf, die eine geringe Neigung gegen die Zeichnungsebene aufweist. Weist der festzulegende Verschlussbolzen 1 einen Kopf auf, der eine Anlagefläche ausbildet, die im wesentlichen senkrecht zur Längsachse des Verschlussbolzens 1 orientiert ist, so kann der gesamte Kipperverschluss vorteilhaft so ausgeführt werden, dass im Schließzustand des Kipperverschlusses diese Anlagefläche in mechanischem Kontakt mit der Sicherungsfläche 12 steht, wobei die beiden Flächen vorteilhaft um einen solchen Winkel gegeneinander geneigt sind, dass sich eine Selbsthemmung ergibt.

Weiterhin sind im Handhebel 3 Sicherungsbohrungen 8 ausgeführt, die dazu vorgesehen sind, im Schließzustand des Kipperverschlusses Sicherungsstifte aufzunehmen, die in zugehörige Sicherungsbohrungen 8 in der Grundplatte 2 eingreifen.

Schliesslich sind im Griffbereich des Handhebels 3 zwei Befestigungslöcher 10 ausgeführt, die dazu vorgesehen sind, die offenen Enden 11 eines Riegelmittels 4 aus Stahldraht aufzunehmen. Der Handhebel 3 aus Figur 1 entspricht bis auf die Befestigungslöcher 10 einem aus der Stand der Technik bekannten Handhebel eines Kipperverschlusses, wie er von der Anmelderin angeboten wird.

Figur 2 zeigt eine Grundplatte 2 eines erfindungsgemäßen Kipperverschlusses in einem ersten Ausführungsbeispiel. Die Grundplatte 2 ist ebenfalls aus einem Stahl mit den erforderlichen Festigkeitswerten geschmiedet, insbesondere gesenkgeschmiedet. Auch hier bietet sich die Verwendung von Baustahl an. Die Oberflächen der Grundplatte 2 sind ebenfalls korrosionsbeständig ausgeführt, beispielsweise mittels Feuerverzinkung. Die Grundplatte 2 weist eine Bohrung 7 auf, die zur Aufnahme eines Bolzens 6 vorgesehen ist, mittels welchem der Handhebel 3 schwenkbar mit der Grundplatte 2 verbunden wird. Weiterhin weist die Grundplatte 2 eine Ausnehmung 14 auf, die gemeinsam mit dem Innenbereich 15 des Handhebels 3 im Schließzustand des Kipperverschlusses den Verschlussbolzen 1 festlegt. Im unteren Bereich der Grundplatte 2 sind zwei Sicherungsbohrungen 8 ausgeführt, die mit den Sicherungsbohrungen 8 des Handhebels 3 gemäss Figur 1 korrespondieren. Bis zu diesem Punkt entspricht der Aufbau der Grundplatte 2 demjenigen Aufbau, dem die von der Anmelderin bereits vertriebenen Kipperverschlüsse aufweisen. Zusätzlich bildet die Grundplatte 2 jedoch im unteren Bereich einen Fangbereich 5 aus, der im gezeigten ersten Ausführungsbeispiel in Form einer Nase 9 ausgeführt ist, die eine Anlagefläche 13 für das Riegelmittel 4 ausbildet.

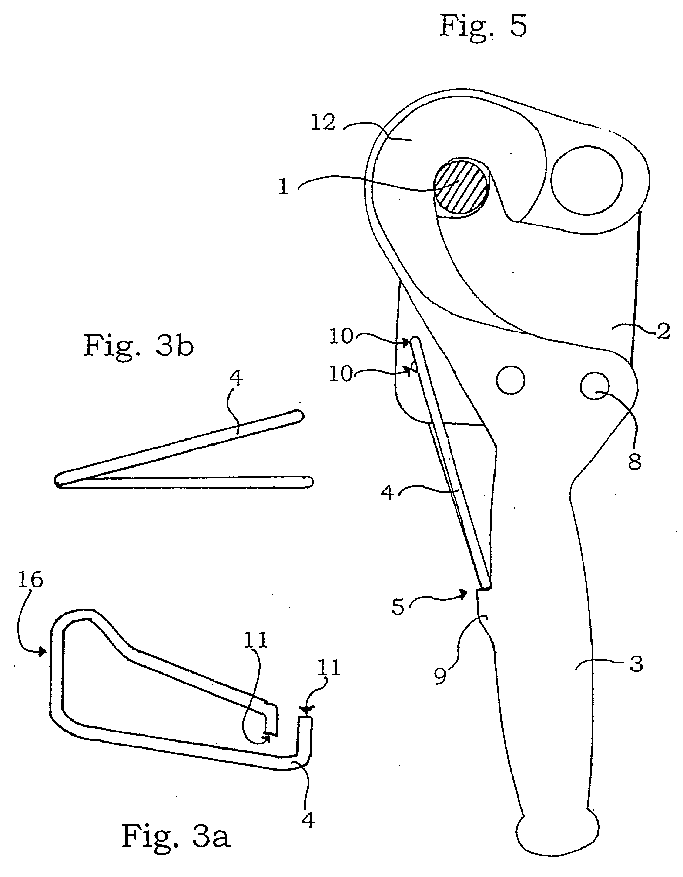

Aus den Figuren 3a und 3b ist das Riegelmittel 4 des ersten Ausführungsbeispiels in Aufsicht und Seitenansicht zu ersehen. Es handelt sich um einen offenen Drahtbügel aus einem korrosionsgeschützten Stahldraht mit guten Federungseigenschaften, beispielsweise um einen Stahldraht aus Edelstahl mit einer Stärke von etwa 3 mm. Das bügelförmige Riegelmittel 4 weist zwei offene Enden 11 auf, die dazu vorgesehen sind, in die Befestigungslöcher 10 des Handhebels 3 eingeführt zu werden.

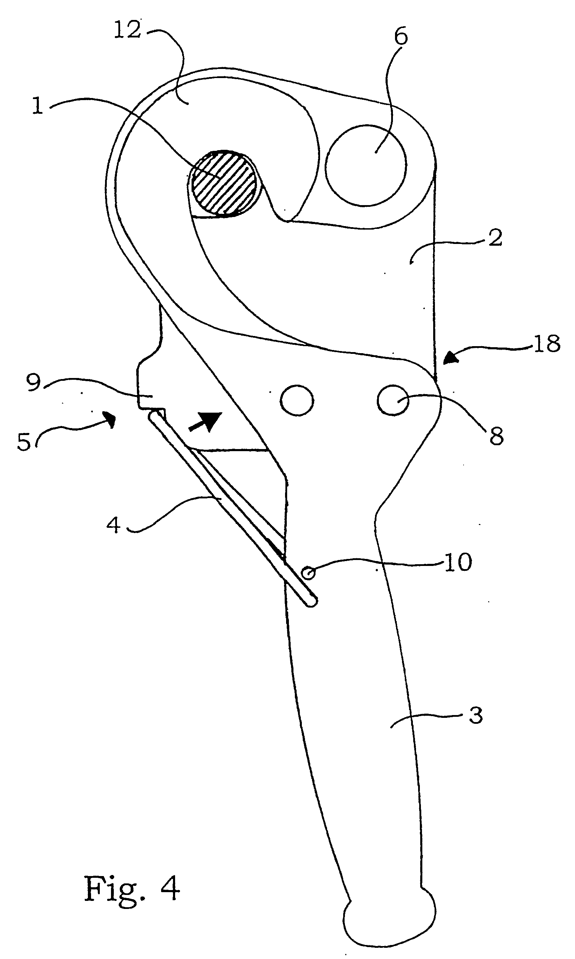

Figur 4 zeigt den Kipperverschluss gemäss des ersten Ausführungsbeispiels in Aufsicht im Schließzustand. Der Handhebel 3 ist mit der Grundplatte 2 über einen Bolzen 6 verbunden, der vorteilhaft als Nietverbindung ausgeführt ist. Alternativ bietet sich jedoch eine Verbindung mittels Verschraubung an, bei der ein Gewindebolzen in die Bohrung 7 der Grundplatte 2 eingeschweißt wird. Zwischen dem Kopf des Bolzens 6 und dem Handhebel 3 oder zwischen dem Handhebel 3 und der Grundplatte 2 kann ein Federring vorgesehen werden, der die Drehverbindung von Grundplatte 2 und Handhebel 3 mit einer vorbestimmten Vorspannung beaufschlagt.

Im Schließzustand des Kipperverschlusses ist der Verschlussbolzen 1 gefangen im Innenbereich 15 des Handhebels 3 und der Ausnehmung 14 der Grundplatte 2. Der Kipperverschluss kann geführt werden, dass der Verschlussbolzen 1 drehbar bleibt.

In die Befestigungslöcher 10 des Handhebels 3 sind die offenen Enden 11 des als Bügel aus Stahldraht ausgebildeten Riegelmittels 4 eingeführt, wobei durch die Formgebung des bügelförmigen Riegelmittels 4 und die Festlegung der offenen Enden 11 in den Befestigungslöchern 10 eine drehbare Lagerung des Riegelmittels 4 um die Befestigungslöcher 10 erzielt wird. Diese Drehbewegung ist in Richtung auf den Innenbereich 15 des Handhebels 3 durch die Federwirkung des Riegelmittels 4 vorgespannt ist. Die Richtung der Vorspannung ist in Figur 4 durch einen Pfeil gekennzeichnet. Die geometrischen Abmessungen des bügelförmigen Riegelmittels 4 sind so bemessen, dass im Schließzustand des Kipperverschlusses das bogenförmige obere Ende 16 des bügelförmigen Riegelmittels 4 zur Anlage an die Anlagefläche 13 kommt, die von der Nase 9 der Grundplatte 2 ausgebildet wird. Besondere Vorteile ergeben sich, wenn die Anlagefläche 13 so ausgerichtet ist, dass ihre Flächen normale parallel zu der Bewegungsrichtung des bügelförmigen Riegelmittels 4 beim Übergang vom Schließzustand in den Öffnungszustand des Kipperverschlusses ist.

Durch die Anlage des bogenförmigen oberen Endes 16 des Riegelmittels 4 an der Anlagefläche 13 wird eine Drehbewegung des Handhebels 3 aus dem Schließzustand in den Öffnungszustand des Kipperverschlusses blockiert. Dabei bleibt dieser gesicherte Zustand auch unter den rauen Betriebsbedingungen eines Nutzfahrzeugs stets erhalten, da das Riegelmittel 4 aufgrund seiner federnden Ausbildung stets im Eingriff mit dem Fangbereich 5 verbleibt.

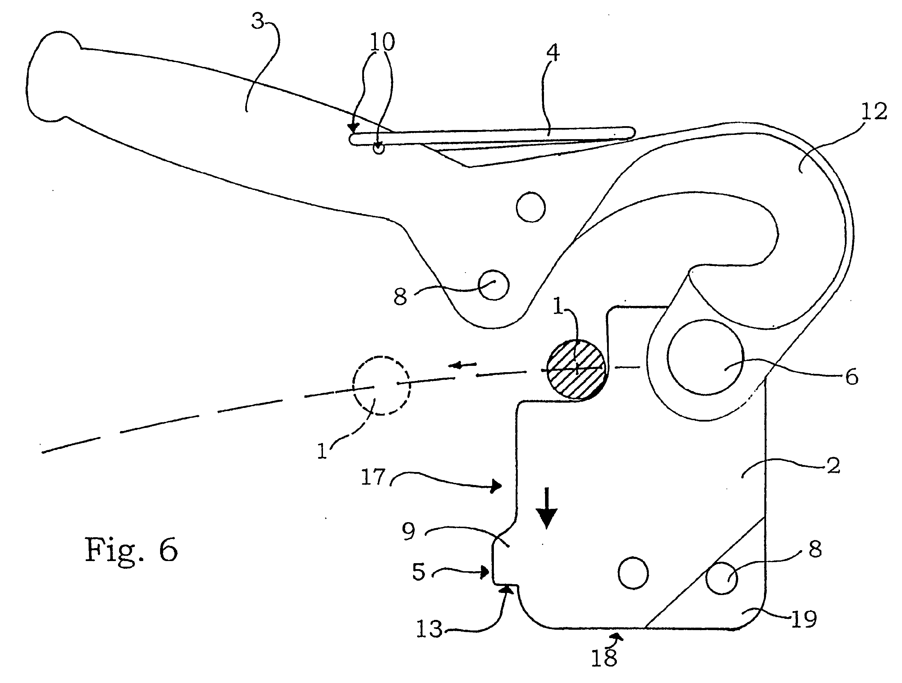

Aus Fig. 6 ist ein Kipperverschluss gemäß des vorstehend beschriebenen Ausführungsbeispiels im Öffnungszustand ersichtlich. Der Handhebel 3 ist um die durch den Bolzen 6 gebildete Drehachse so weit gegen die Grundplatte 2 verschwenkt, dass der Verschlussbolzen 1 aus dem Innenbereich 15 des Handhebels 3 hinausgelangt und somit freigegeben wird. Die Bewegungsrichtung des Verschlussbolzens beim Abklappen der zu sichernden Bordwand ist in Fig. 6 gestrichelt eingezeichnet. Aufgrund der Federwirkung des Riegelmittels 4 liegt dieses mit seinem bogenförmigen Ende 16 am Handhebel 3 an und stört somit die Bewegung des Handhebels 3 beim Öffnen des Kipperverschlusses nicht.

Zum Schließen des Kipperverschlusses wird der Handhebel 3 aus der Freigabestellung in die Schließstellung um einen Winkel von etwa 120° verschwenkt, wobei der Verschlussbolzen 1 der zu arretierenden Bordwand im Innenbereich 15 des Handhebels 3 und der Ausnehmung 14 der Grundplatte 2 festgelegt wird. Während der Drehbewegung des Handhebels 3 kommt das bügelförmige Riegelmittel 4 im Bereich seines bogenförmigen oberen Endes 16 zur Anlage an die Seitenfläche 17 der Grundplatte 2. Während der Drehbewegung des Handhebels 3 gleitet das bogenförmige Ende 16 des Riegelmittel 4 in Pfeilrichtung über den Fangbereich 5. Unmittelbar bevor der Handhebel 3 seine Schließstellung einnimmt gleitet das bogenförmige Ende 16 über die Nase 9 hinweg und gelangt Anlage an die Anlagefläche 13. Damit ist die Schließstellung des Kipperverschlusses, wie sie aus Fig. 4 ersichtlich ist, eingenommen.

Zum Öffnen des Kipperverschlusses muss das bügelförmige Riegelmittel 4 in der aus Fig. 4 ersichtlichen Schließstellung manuell vom Benutzer entgegen der Pfeilrichtung gegen die Federwirkung über die Nase 9 gehoben werden. Dabei muss der Benutzer das Riegelmittel 4 in dieser Position halten, bis das bogenförmige Ende 16 des Riegelmittels 4 durch eine Drehbewegung des Handhebels 3 über die Nase 9 hinweggeführt ist.

Im aus Fig. 4 ersichtlichen Schließzustand des erfindungsgemäßen Kipperverschlusses gemäß dieses Ausführungsbeispiels kann der Kipperverschluss zusätzlich in der Schließstellung arretiert werden, indem durch die Sicherungsbohrungen 8 Sicherungsstifte gesteckt werden, wie dies aus dem Stand der Technik bekannt ist. Dies ist aber nicht erforderlich, um den Handhebel 3 sicher in der Schließstellung zu arretieren. Es kann daher auch vollständig auf die Sicherungsbohrungen 8 im Handhebel 3 und der Grundplatte 2 verzichtet werden. Dies ermöglicht eine noch effizientere Herstellung des Kipperverschlusses ermöglicht, da ein zusätzlicher Arbeitsgang bei der Nachbearbeitung der Grundplatte 2 und des Handhebels 3 entfällt.

Die Bohrungen in der Grundplatte 2 und sowie im Handhebel 3 können beispielsweise mittels Bohrung oder Stanzung ausgeführt werden.

Ein weiteres Ausführungsbeispiel ist aus Fig. 5 ersichtlich. Dieser Kipperverschluss entspricht in seinem Aufbau im wesentlichen demjenigen aus Fig. 4. Einziger Unterschied zwischen beiden Kipperverschlüssen ist die relative Anordnung von Befestigungslöchern 10 für das Riegelmittel 4, die genaue Formgebung des Riegelmittels 4 sowie die Lage des Fangbereichs 5. Als technisch äquivalente Lösung zum Kipperverschluss gemäß Fig. 4 ist beim Ausführungsbeispiel in Fig. 5 das bügelförmige Riegelmittel 4 in Befestigungslöchern 10 eingeführt, die in der Grundplatte 2 ausgeführt sind. Im Schließzustand des Kipperverschlusses gelangt das bogenförmige Ende 16 des Riegelmittels 4 zur Anlage an die Anlagefläche 13 der Nase 9, die am Handhebel 3 angeformt ist und die den Fangbereich 5 ausbildet. Die Arretierung des Handhebels 3 erfolgt äquivalent zu dem aus Fig. 4 ersichtlichen Ausführungsbeispiel. Dabei ist im Fangbereich 5 zwischen Handhebel 3 und Grundplatte 2 ein solcher Abstand vorgesehen, dass das angepasst geformte Riegelmittel 4 beim Öffnen des Kipperverschlusses zwischen Handhebel 3 und Grundplatte 2 hindurchgeführt werden kann. Das Ausführungsbeispiel gemäß Fig. 5 weist jedoch einen verringerten Bedienungskomfort gegenüber dem Ausführungsbeispiel aus Fig. 4 auf.

Selbstverständlich ist es möglich, die Drehbewegung des Handhebels 3 auf der Grundplatte 2 nicht nur durch eine Anlage des bogenförmigen Endes des Riegelmittels 4 an einer Anlagefläche zu blockieren. Alternativ ist es ohne weiteres möglich, beispielsweise bei einer Anordnung des Riegelmittels 4 auf der vom Innenbereich 15 abgewandten Seite des Handhebels 3, eine Arretierung dadurch herbeizuführen, dass ein Vorsprung, der in der Grundplatte 2 ausgebildet ist, in das Innere des bogenförmigen Endes 16 des Riegelmittel 4 eingreift. Je nach Anordnung des Riegelmittels 4 relativ zum Fangbereich 5 erfolgt die Arretierung durch Blockierung einer Zug- oder Druckbelastung des in den Fangbereich 5 eingreifenden Riegelmittels 4.

Die obenstehenden Ausführungsbeispiele den Kipperverschluss im Schließzustand selbsttätig durch eine Drehbewegung des jeweiligen Riegelmittels 4. Ohne weiteres sind jedoch auch Riegelmittel 4 denkbar, die eine Verriegelung durch eine Translationsbewegung herbeiführen. Solche Beispiele sind jedoch nicht Teil des gegenstandes der Erfindung. Hierzu kann beispielsweise auf die Nase 9 sowie die Befestigungslöcher 10 vollständig verzichtet werden. Im Handhebel 3 und in der Grundplatte 2 wird jeweils zumindest eine Sicherungsbohrung 8 ausgeführt. In diese Sicherungsbohrung 8 wird ein federnd vorgespannter Sicherungsstift eingesetzt, der eine Längsbewegung senkrecht zur Ebene der Drehbewegung des Handhebels 3 ausführen kann und mittels Feder so vorgespannt ist, dass er in seiner Ruhelage durch die Sicherungsbohrung 8 sowohl im Handhebel 3 als auch in der Grundplatte 2 hindurchgreift. Dieser Sicherungsstift wird vorteilhaft mit einem Knopf an seiner Oberseite versehen, mit dem der Benutzer den Sicherungsstift gegen seine federnde Vorspannung aus der Sicherungsbohrung 8 in der Grundplatte 2 herausführen kann. In diesem entriegeltem Zustand ist dann eine Öffnung des Kipperverschlusses möglich. Durch eine entsprechende Ausführung der Grundplatte 2, beispielsweise mit einer geeigneten Anlauffläche an der zweiten Seitenfläche 18 der Grundplatte 2, ist es möglich, auch bei dieser Ausführung des Riegelmittels 4 eine selbsttätige Sicherung des Handhebels 3 in seiner Schließstellung zu erzielen.

Vorteilhaft wird zur Erstellung eines erfindungsgemäßen Kipperverschlusses eine geschmiedete Grundplatte 2 verwendet, die zur Verschweißung mit einer Bordwand eines Nutzfahrzeugs während dessen Produktion vorgesehen ist. In diesem Fall sind in der Grundplatte keine zusätzlichen Bohrungen zur Aufnahme von Befestigungsschrauben erforderlich, was die Produktionskosten senkt. Weiterhin kann auf eine korrosionsgeschützte Ausführung der Grundplatte 2 verzichtet werden, da die komplette Bordwand mit angeschweißter Grundplatte 2 mit einem Korrosionsschutz versehen werden kann. Eine zur Verschweißung mit einer Bordwand vorgesehene Grundplatte 2 wird mit einem Handhebel 3 vorteilhaft nicht mittels einer Nietverbindung, sondern mittels einer Schraubverbindung verbunden. Hierzu weist die Grundplatte eine Bohrung 7 auf, in den ein Gewindebolzen 6 eingesetzt ist, der mit der Grundplatte 2 mittels Schweißung verbunden ist. Diese so vorkonfektionierte Grundplatte 2 wird dann vom Hersteller des Nutzfahrzeugs mit der Bordwand verbunden und ggf. weiterbehandelt. Erst in einem späten Stadium der Herstellung des Nutzfahrzeugs wird dann die mit der Bordwand fest verbundene Grundplatte 2 zu einem erfindungsgemäßen Kipperverschluss mit Handheben 3 etc. komplettiert. Eine solche Grundplatte kann separat angeboten werden, so dass sich dem Abnehmer die vorteilhafte Möglichkeit bietet, einen Kipperverschluss nach eigenen Vorstellungen aufzubauen.

## Patentansprüche

1. Kipperverschluss zum Festlegen eines Verschlussbolzens oder -Hakens (1) einer abklappbaren Bordwand eines Nutzfahrzeugs, mit
a) einer Grundplatte (2), die zur Befestigung an einer weiteren Bordwand oder einer Runge vorgesehen ist,
b) einem auf der Grundplatte (2) schwenkbar gelagerten Handhebel (3), der in einem Schließzustand in Zusammenwirkung mit der Grundplatte (2) eine Lagerbuchse zur Aufnahme des Verschlussbolzens - oder Hakens (1) ausbildet und in einem Freigabezustand den Verschlussbolzen oder -Haken (1) freigibt, sowie
c) einem federnd ausgebildeten Riegelmittel (4) und einem zugehörigen Fangbereich (5), wobei das Riegelmittel (4) am Handhebel und der Fangbereich (5) an der Grundplatte (2) vorgesehen ist, oder umgekehrt, wobei das Riegelmittel (4):
i) im Schließzustand dergestalt in den Fangbereich (5) eingreift, dass der Handhebel (3) im Schließzustand arretiert ist, und
ii) beim Verschwenken des Handhebels (3) in den Schließzustand aufgrund seiner federnden Ausbildung selbsttätig in Eingriff mit dem Fangbereich (5) gelangt und dort verbleibt **dadurch gekennzeichnet, dass** das Riegelmittel (4) bei einer Betätigung eine Drehbewegung ausführt.

2. Kipperverschluss gemäß Anspruch 1, **dadurch gekennzeichnet, dass** der Fangbereich (5) als Vorsprung ausgebildet ist, an dem das Riegelmittel (4) im Schließzustand aufgrund seiner federnden Ausbildung zur Anlage kommt.

3. Kipperverschluss gemäß Anspruch 1, **dadurch gekennzeichnet, dass** das Riegelmittei (4) als drehbar federnder Bügel aus Stahldraht ausgebildet ist.

4. Kipperverschluss gemäß Anspruch 3, **dadurch gekennzeichnet, dass** der Bügel offene Enden aufweist, die an zwei verschiedenen,Stellen drehbar gelagert sind.

5. Kipperverschluss gemäß Anspruch 1, **dadurch gekennzeichnet, dass** das Riegelmittel (4) zum Verschwenken des Handhebels (3) aus dem Schließzustand in den Freigabezustand handbetätigt aus dem Fangbereich (5) bewegt wird.

## Claims

1. A dumping body closure system for securing a closing bolt or hook (1) of a gate of a utility vehicle adapted to be folded down, having
a) a base plate (2) that is provided for fastening on another gate or a stanchion,
b) a hand lever (3) pivotally carried on the base plate (2) and cooperating in a closed condition with the base plate (2) to form a bearing bush for receiving the closing bolt or hook (1) and releasing the closing bolt or hook (1) in a release condition as well as
c) a resiliently configured locking means (4) and an associated catch region (5), with the locking means (4) being provided on the hand lever and the catch region (5) on the base plate (2) or vice versa, with the locking means (4):
i) engaging the catch region (5) in a closed condition in such a manner that the hand lever (3) is locked in the closed condition and
ii) thanks to its resilient configuration, moving all by itself into, and remaining in, engagement with the catch region (5) as the hand lever (3) is being pivoted into the closed condition,
**characterized in that** the locking means (4) executes a rotation upon actuation.

2. The dumping body closure system as set forth in claim 1, **characterized in that** the catch region (5) is configured to be a projection against which the locking means (4) comes to rest in the closed condition thanks to its resilient configuration.

3. The dumping body closure system as set forth in claim 1, **characterized in that** the locking means (4) is configured to be a rotatable resilient bar made from steel wire.

4. The dumping body closure system as set forth in claim 3, **characterized in that** the bar comprises open ends that are rotatably carried on two different points.

5. The dumping body closure system as set forth in claim 1, **characterized in that** the locking means (4) is manually actuated to move out of engagement with the catch region (5) for pivoting the hand lever (3) from the closed condition into the release condition.

## Revendications

1. Dispositif de fermeture d'une benne basculante destiné à fixer un boulon ou crochet (1) de fermeture d'un panneau rabattable d'un véhicule utilitaire, avec
a) une plaque de base (2) destinée à la fixation prévue sur un autre panneau ou sur un rancher,
b) un levier manuel (3) monté pivotant sur la plaque de base (2) et coopérant avec la plaque de base (2) pour former un coussinet destiné à recevoir le boulon ou crochet (1) de fermeture dans un état de fermeture et libérant le boulon ou crochet (1) de fermeture dans un état de libération, ainsi qu'avec
c) un moyen de verrouillage (4) conformé pour être élastique et avec une partie d'engagement (5) associée, le moyen de verrouillage (4) étant prévu sur le levier manuel et la partie d'engagement (5), sur la plaque de base (2) ou inversement, le moyen de verrouillage (4) :
i) s'engageant, en état de fermeture, dans la partie d'engagement (5) de telle sorte que le levier manuel (3) est bloqué en état de fermeture et
ii) se mettant lui-même en prise dans la partie d'engagement (5) et restant engagé dans celle-ci lors du pivotement du levier manuel (3) en état de fermeture grâce à ses propriétés élastiques,
**caractérisé en ce que** le moyen de verrouillage (4) effectue un mouvement de rotation lorsqu'il est actionné.

2. Dispositif de fermeture d'une benne basculante selon la revendication 1, **caractérisé en ce que** la partie d'engagement (5) est conformée en forme de saillie contre laquelle, grâce à ses propriétés élastiques, vient en appui le moyen de verrouillage (4) en état de fermeture.

3. Dispositif de fermeture d'une benne basculante selon la revendication 1, **caractérisé en ce que** le moyen de verrouillage (4) est conformé en forme d'étrier en fil d'acier.

4. Dispositif de fermeture d'une benne basculante selon la revendication 3, **caractérisé en ce que** l'étrier comporte des extrémités ouvertes qui sont montées mobiles en rotation à deux endroits différents.

5. Dispositif de fermeture d'une benne basculante selon la revendication 1, **caractérisé en ce que** le moyen de verrouillage (4) est actionné manuellement pour le désengager de la partie d'engagement (5) afin de faire pivoter le levier manuel (3) de l'état de fermeture dans l'état de libération.
